# EUROPÄISCHE PATENTSCHRIFT

(11) **EP 3 790 756 B1**
(45) Veröffentlichungstag und Bekanntmachung des Hinweises auf die Patenterteilung: **07.06.2023**
(21) Anmeldenummer: 19720505.7
(22) Anmeldetag: 18.04.2019
(51) Int. Cl.: B60K 35/00, B60K 37/06

(54) **BEDIEN- UND/ODER ANZEIGEELEMENT FÜR EIN KRAFTFAHRZEUG**
OPERATING AND/OR DISPLAY ELEMENT FOR A MOTOR VEHICLE
ÉLÉMENT DE COMMANDE ET/OU D'AFFICHAGE POUR VÉHICULE AUTOMOBILE

(30) Priorität: 07.05.2018 DE 102018207071
(43) Veröffentlichungstag der Anmeldung: 17.03.2021
(73) Patentinhaber: Volkswagen AG, 38440 Wolfsburg (DE)
(72) Erfinder: MEIERLING, Klaus, 44879 Bochum (DE); ABDELAZIZ, Abdelrahman, 47057 Duisburg (DE)
(86) Internationale Anmeldenummer: PCT/EP2019/060110
(87) Internationale Veröffentlichungsnummer: WO 2019/214926

(56) Entgegenhaltungen:
- EP-A1- 3 473 479
- DE-A1-102016 005 619
- DE-A1-102016 215 763

## Beschreibung

Die Erfindung betrifft ein Bedien- und/oder Anzeigeelement für ein Kraftfahrzeug.

Ein Einsatz von Lichtleitern für Beleuchtungszwecke ist bereits seit längerer Zeit bekannt. Dazu wurden bisher beispielsweise lichtleitende Folien verwendet. Auf diese Weise hergestellte Beleuchtungen sind jedoch aufwendig und teuer.

Die WO 2010 / 005 810 A2 beschreibt eine optische Einrichtung mit einer Lichtquelle und einem viskoelastischen Lichtleiter, in dem von der Lichtquelle ausgestrahltes Licht durch interne Totalreflexion transportiert wird. Weiterhin weist die optische Einrichtung einen retroreflektiven Film auf, wobei das in dem viskoelastischen Lichtleiter transportierte Licht aus diesem extrahiert und von einer strukturierten Oberfläche des retroreflektiven Films retroreflektiert wird.

Aus der WO 2011 / 053 804 A2 ist eine Beleuchtungseinrichtung bekannt, welche eine Lichtquelle, einen mit dieser optisch gekoppelten Lichtleiter und einen Transducer aufweist. Der Transducer ist dazu eingerichtet, die Lichtquelle mit Energie zu versorgen durch Umwandlung von Energie, die er von einem entfernten Transmitter erhält. Die Energie kann in Form von Radiowellen, Mikrowellen, Infrarotstrahlung, sichtbarem Licht, Schallwellen oder Wärme übertragen werden.

Die US 9,466,246 B1 offenbart einen Display-Stapel mit einem Umgebungslichtsensor. Der Displaystapel umfasst dabei ein Deckglas, eine an dessen Unterseite angeordnete berührungssensitive Schicht, einen mit dieser Schicht optisch gekoppelten Lichtleiter, den Umgebungslichtsensor und eine optisch klare adhäsive Schicht sowie ein elektrophoretisches Anzeigeelement, welches optisch mit dem Lichtleiter gekoppelt ist. Der Umgebungslichtsensor umfasst ein Detektionsfenster mit einem Brechungsindex, welcher verschieden ist von einem Brechungsindex des Lichtleiters. Die adhäsive Schicht ist zwischen dem Detektionsfenster und dem Lichtleiter angeordnet und weist einen dritten Brechungsindex auf.

Die DE 10 2016 215 763 A1 betrifft eine Bedientafel für ein Fahrzeug und ein Verfahren zu dessen Herstellung. Bei dem Verfahren wird eine Dekorschicht in einem ersten

Gusshohlraum angeordnet, dann ein Kunststoffmaterial in den ersten Gusshohlraum gegen eine hintere Fläche der Dekorschicht eingegeben, um einen Lichtleiter zu bilden, der einen Plattenabschnitt und einen transversalen Abschnitt umfasst. Anschließend wird ein Anlage-Detektionselement in einem zweiten Gusshohlraum gegen den Plattenabschnitt des Lichtleiters angeordnet und ein Kunststoffmaterial in den zweiten Gusshohlraum eingegeben, um einen Träger zu bilden. Schließlich wird eine Lichtquelle gegen ein hinteres Ende des transversalen Abschnitts des Lichtleiters angeordnet.

Die EP 3 473 479 A1 betrifft eine beleuchtete Verkleidungsvorrichtung mit einer Lichtleiter-Unterbaugruppe. Die Lichtleiter-Unterbaugruppe umfasst eine lichtdurchlässige Folienschicht mit einem Verdunkelungsmittel auf einer ersten Oberfläche der Folienschicht, um mehrere lichtdurchlässige Fenster der Folienschicht zu definieren. Mehrere lichtemittierende Dioden sind jeweils auf der Filmschicht in der Nähe eines der Fenster angebracht. Ein Lichtleiter aus transparentem Material wird über den Fenstern angebracht und ermöglicht die Übertragung von Licht von den Leuchtdioden durch die Fenster. Ein Substrat, das eine undurchsichtige polymere Materialschicht definiert, wird gemeinsam über den Leuchtdioden, dem Lichtleiter und der ersten Oberfläche der Folie angebracht und erstreckt sich über einen Umfang der Folienschicht hinaus. Eine transparente Deckschicht erstreckt sich über eine zweite Oberfläche der Folienschicht, die der ersten Oberfläche gegenüberliegt und ein Teil des undurchsichtigen Polymermaterials erstreckt sich über den Umfang der Folienschicht hinaus.

Aufgabe der vorliegenden Erfindung ist es, ein besonders einfach und kostengünstig herstellbares Bedien- und/oder Anzeigeelement zu schaffen.

Diese Aufgabe wird erfindungsgemäß durch die Gegenstände der unabhängigen Patentansprüche gelöst. Vorteilhafte Ausgestaltungen und Weiterbildungen der Erfindung sind in den abhängigen Patentansprüchen, in der Beschreibung und in den Zeichnungen angegeben.

Ein erfindungsgemäßes Bedien- und/oder Anzeigeelement für ein Kraftfahrzeug weist ein außenseitiges Oberflächenelement und ein aus einem optisch klaren Kleber oder Adhäsiv bestehendes Flächenlichtleiterelement auf. Das Flächenlichtleiterelement ist dabei auf einer Unterseite des Oberflächenelements mit diesem verbunden. Die Unterseite des Oberflächenelements ist dabei eine von einem Benutzer des Bedien- und/oder Anzeigeelements abgewandte Seite, insbesondere einer Haupterstreckungsfläche, des Bedien- und/oder Anzeigeelements. Weiterhin weist das erfindungsgemäße Bedien- und/oder Anzeigeelement eine Lichtquelle auf, die angeordnet ist zum Einkoppeln von von ihr ausgestrahltem Licht in das Flächenlichtleiterelement. Erfindungsgemäß ist das Oberflächenelement bereichsweise lichtdurchlässig für das von der Lichtquelle ausgestrahlte Licht und bereichsweise hierfür undurchlässig ausgebildet. Zudem ist es erfindungsgemäß vorgesehen, dass das Flächenlichtleiterelement zwischen der Unterseite des Oberflächenelements und einem unteren Trägerelement angeordnet ist und sich zumindest über die lichtdurchlässigen Bereiche des Oberflächenelements erstreckt zum flächigen Hinterleuchten des Oberflächenelements durch Auskoppeln des eingekoppelten Lichts durch eine der Unterseite des Oberflächenelements zugewandte Oberseite des Fl ächenl ichtleiterelements.

Das Flächenlichtleiterelement ist eine flächig erstreckte oder ausgedehnte Schicht aus dem optisch klaren Kleber (OCA, englisch: "Optically Clear Adhesive"), in der sich oder durch die sich das eingekoppelte Licht ausbreiten kann. Eine Größe oder Fläche des Flächenlichtleiterelements in dessen Haupterstreckungsebene, Haupterstreckungsfläche oder Haupterstreckungsrichtung ist dabei signifikant größer als eine senkrecht dazu gemessene Dicke, also Materialstärke, des Flächenlichtleiterelements. Die Haupterstreckungsflächen oder -ebenen des Flächenlichtleiterelements und des Oberflächenelements erstrecken sich zumindest im Wesentlichen parallel zueinander. Dies kann insbesondere auch für das untere Trägerelement entsprechend, also sinngemäß übertragen, gelten. Das Oberflächenelement, das Flächenlichtleiterelement und das untere Trägerelement bilden also eine Schicht- oder Sandwichstruktur. Dadurch, dass das Flächenlichtleiterelement aus dem optisch klaren Kleber besteht oder gebildet ist, kann diese Schichtstruktur besonders einfach und kostengünstig hergestellt und zusammengehalten werden. Das in das Flächenlichtleiterelement eingekoppelte Licht breitet sich zwar über dessen gesamte Fläche oder Ausdehnung aus, aufgrund der nur teilweise oder bereichsweise lichtdurchlässigen Ausbildung des Oberflächenelements erscheinen jedoch von außen betrachtet, also mit Blickrichtung auf eine von dem Flächenlichtleiterelement abgewandte Außen- oder Oberseite des Oberflächenelements betrachtet, nur der lichtdurchlässige Bereich oder die lichtdurchlässigen Bereiche des Oberflächenelements bei aktivierter Lichtquelle hinterleuchtet, also hell oder leuchtend. Der lichtdurchlässige Bereich des Oberflächenelements kann beispielsweise in Form eines oder mehrerer Symbole, Zeichen, Piktogramme und/oder dergleichen geformt sein. Der lichtdurchlässige Bereich kann also mehrere, insbesondere nicht zusammenhängende Teilbereiche umfassen.

Auf diese Weise kann besonders einfach, kostengünstig effektiv und effizient die gleichmäßige und flächige Hinterleuchtung des Oberflächenelements beziehungsweise des Bedien- und/oder Anzeigeelements realisiert werden. Beispielsweise kann der optisch klare Kleber auf das untere Trägerelement oder auf die Unterseite des Oberflächenelements aufgegossen oder aufgespritzt werden. Das Flächenlichtleiterelement kann sich insbesondere über eine gesamte Ausdehnung oder Erstreckung des Oberflächenelements erstrecken oder ausdehnen. Dabei kann vorteilhaft insbesondere die flächige Hinterleuchtung realisiert werden, ohne dass die in früheren Realisierungen verwendeten Folien verwendet werden müssen. So kann ein hoher Qualitätsstandard auf besonders einfache Weise sichergestellt werden, da eine korrekte Platzierung der Folien als mögliche Fehlerquelle entfallen kann.

Das erfindungsgemäße Bedien- und/oder Anzeigeelement kann in dem Kraftfahrzeug beispielsweise an einem Multifunktionshebel an einer Lenksäule, an einem Schalthebel, an einem Lenkrad, an einer Mittelkonsole und/oder Instrumententafel, an einer Tür, einem Türgriff, einer Armablage und/oder dergleichen mehr angeordnet oder verwendet werden. Durch entsprechende Gestaltung des lichtdurchlässigen beziehungsweise des lichtundurchlässigen Bereiches des Oberflächenelements können so entsprechende Funktionen, Funktions- oder Schaltzustände und/oder dergleichen mehr angezeigt werden. Besonders vorteilhaft können dabei mittels einer einzigen Lichtquelle mehrere lichtdurchlässige Bereiche oder Teilbereiche, also mehrere Symbole, Piktogramme und/oder dergleichen hinterleuchtet werden. Mehrere unterschiedliche Funktions- oder Schaltzustände können beispielsweise durch entsprechende Steuerung der Lichtquelle angezeigt werden. Hierzu kann beispielsweise eine Helligkeit oder Lichtintensität und/oder eine Farbe der Lichtquelle, also des von dieser ausgestrahlten Lichtes, gesteuert, also in Abhängigkeit von dem jeweils anzuzeigenden Funktions- oder Schaltzustand oder dergleichen, insbesondere automatisch, ausgewählt oder eingestellt werden.

Die Lichtquelle kann bevorzugt als lichtemittierende Diode (LED) ausgebildet sein. Insbesondere kann die Lichtquelle dabei eine oder mehrere Einzel- oder Teillichtquellen, also etwa mehrere einzelne LEDs umfassen. Diese mehreren Teillichtquellen können je nach Bedarf oder Anforderungen gruppiert oder räumlich verteilt angeordnet sein. Hierdurch kann vorteilhaft eine höhere Helligkeit beziehungsweise Leuchtdichte ebenso wie eine besonders gleichmäßige Ausleuchtung, also eine homogene Flächenhelligkeit über den gesamten lichtdurchlässigen Bereich des Oberflächenelements hinweg, erreicht werden.

Das Auskoppeln des Lichtes aus dem Flächenlichtleiterelement kann einfach dadurch erfolgen, dass ein jeweiliger Lichtstrahl, der - beispielsweise aufgrund einer Strahlungscharakteristik der Lichtquelle und/oder aufgrund von Reflexionen und/oder Materialinhomogenitäten - an oder unter dem lichtdurchlässigen Bereich des Oberflächenelements innenseitig auf die Oberfläche des Flächenlichtleiterelements trifft und dort das Flächenlichtleiterelement verlässt, also aus diesem austritt. Trifft der Lichtstrahl hingegen an oder unter dem lichtundurchlässigen Bereich des Oberflächenelements auf dessen Unterseite oder auf die Oberfläche des Flächenlichtleiterelements, so kann er dort absorbiert oder bevorzugt zurück in das Flächenlichtleiterelement reflektiert werden. Um Verluste zu vermeiden, kann das Flächenlichtleiterelement unmittelbar an dem Oberflächenelement angeordnet sein, sodass dann die Unterseite des Oberflächenelements und die dieser zugewandte Oberseite des Flächenlichtleiterelements eine gemeinsame Grenzfläche bilden. Ebenso können hier jedoch weitere Elemente, Schichten und/oder Strukturierungen vorgesehen sein. Gleiches gilt für die Unterseite des Flächenlichtleiterelements und das Trägerelement.

Erfindungsgemäß ist das untere Trägerelement als Leiterplatte ausgebildet und zum Versorgen der Lichtquelle mit elektrischer Energie mit der Lichtquelle elektrisch verbunden. Mit anderen Worten ist also die Lichtquelle elektrisch an diese Leiterplatte angeschlossen. Durch diese Anordnung kann vorteilhaft ein besonders kompakter und bauteilarmer, also vorteilhaft wenig komplexer Aufbau realisiert werden. Die Leiterplatte kann beispielsweise ein PCB (englisch: "Printed Circuit Board") sein. Eventuelle Unebenheiten der Leiterplatte auf ihrer dem Flächenlichtleiterelement und dem Oberflächenelement zugewandten Seite können durch den optisch klaren Kleber ausgeglichen werden. Der optisch klare Kleber kann bevorzugt elektrisch isolierend sein und direkt auf die Leiterplatte aufgebracht werden. So kann der optisch klare Kleber, also das Flächenlichtleiterelement, zudem vorteilhaft eine mechanische Schutzwirkung für die Leiterplatte beziehungsweise auf dieser angeordnete Komponenten erfüllen. Besonders vorteilhaft kann die Leiterplatte flexibel ausgebildet sein. Die Leiterplatte kann also ein FPC (englisch: "Flexible Printed Circuit") sein oder einen solchen umfassen. Hierdurch können vorteilhaft komplexe Formen des Bedien- und/oder Anzeigeelements besonders kompakt realisiert werden. Insbesondere kann durch die Flexibilität der Leiterplatte dann erreicht werden, dass diese sich zumindest im Wesentlichen über ihre gesamte Fläche oder zumindest über den lichtdurchlässigen Bereich des Oberflächenelements hinweg in einem konstanten Abstand zu dem Oberflächenelement, also zumindest im Wesentlichen parallel zu diesem oder dessen Haupterstreckungsfläche oder -eben, befindet. Hierdurch kann vorteilhaft eine besonders gleichmäßige Helligkeit oder Leuchtdichte realisiert werden.

Erfindungsgemäß ist das Oberflächenelement zumindest bereichsweise durch das Flächenlichtleiterelement mit dem unteren Trägerelement verklebt. Mit anderen Worten wird also eine Klebeeigenschaft des Flächenlichtleiterelements ausgenutzt, um das Bedien- und/oder Anzeigeelement beziehungsweise dessen Schichtaufbau zusammenzuhalten. Hierdurch kann vorteilhaft auf zusätzliche, ansonsten für diesen Zweck vorgesehene Bauteile, wie beispielsweise eine separate Verklebung oder Verschraubung oder dergleichen, verzichtet werden. Es kann also eine Doppelfunktionalität des Flächenlichtleiterelements - als Lichteiter und als Verbindungsmittel für einige oder alle der übrigen Komponenten oder Bauteile des Bedien- und/oder Anzeigeelementes - realisiert werden, wodurch vorteilhaft Kosten, Herstellungsaufwand und Komplexität eingespart werden können. Ebenso können durch das Flächenlichtleiterelement oder mit dem Flächenlichtleiterelement weitere Komponenten, wie beispielsweise das genannte seitliche Spiegelelement verklebt sein, also besonders aufwandsarm gehalten oder befestigt sein. Vorteilhaft wird durch diese Ausnutzung der Klebeeigenschaft des Flächenlichtleiterelements zudem ein seitliches Verschieben der einzelnen Bauteile oder Komponenten des Bedien- und/oder Anzeigeelements gegeneinander verhindert oder zumindest verringert. Dies ist ein deutlicher Vorteil gegenüber der früher oftmals vorgesehenen losen Schichtung der oben genannten lichtleitenden Folien, welche entweder mit erhöhtem Aufwand zusätzlich aneinander befestigt werden mussten oder sich gegeneinander verschieben konnten.

In vorteilhafter Ausgestaltung der vorliegenden Erfindung ist zumindest ein lichtausstrahlender Teil der Lichtquelle seitlich von dem Flächenlichtleiterelement ebenfalls zwischen dem Oberflächenelement und dem unteren Trägerelement angeordnet. Zumindest der lichtausstrahlende Teil der Lichtquelle ist dabei ausgerichtet zum Einkoppeln des von ihm ausgestrahlten Lichts in das Flächenlichtleiterelement zumindest im Wesentlichen parallel zu einer Haupterstreckungsfläche oder Haupterstreckungsebene des Flächenlichtleiterelements und des Oberflächenelements. Diese Richtung des ausgestrahlten oder eingekoppelten Lichts betrifft dabei zumindest einen Zentralstrahl eines von der Lichtquelle ausgestrahlten Strahlenbündels, Strahlenkegels oder Lichtkegels. Die Lichtquelle kann also dennoch das Strahlenbündel oder den Strahlenkegel mit einem Öffnungswinkel von mehr als 0°, beispielsweise bis zu 180°, ausstrahlen. Jeweilige Randstrahlen an einem äußeren Rand dieses Strahlenbündels oder Strahlenkegels können dann unter einem entsprechenden Winkel zu der Haupterstreckungsfläche des Flächenlichtleiterelements seitlich in dieses eingestrahlt oder eingekoppelt werden. Bei der hier vorgesehenen Anordnung des lichtausstrahlenden Teils der Lichtquelle an einer Querseite oder Seitenfläche des Flächenlichtleiterelements wird das Licht also nicht durch die dem Oberflächenelement zugewandte Oberseite oder die sich dazu zumindest im Wesentlichen parallel erstreckende beziehungsweise gegenüberliegende Unterseite des Flächenlichtleiterelements, sondern durch eine zu diesen Haupterstreckungsflächen zumindest im Wesentlichen senkrecht stehende Seitenfläche des Flächenlichtleiterelements in dieses eingekoppelt. Diese Seitenfläche weist dabei eine geringere Größe oder Flächenausdehnung auf als die genannten Ober- und Unterseiten, also als die Haupterstreckungsflächen des Flächenlichtleiterelements. Das Flächenlichtleiterelement kann beispielsweise eine Dicke von weniger als 1,5 mm, beispielsweise zwischen 0,5 mm und 1 mm, aufweisen, welche dann also einer Höhe der Seitenfläche, durch die bei dieser Anordnung das Licht eingekoppelt wird, entspricht. Demgegenüber kann eine Flächenausdehnung, also eine Größe der Haupterstreckungsfläche oder Haupterstreckungsflächen des Flächenlichtleiterelements beispielsweise mehrere Quadratzentimeter betragen.

Der zumindest eine lichtausstrahlende Teil der Lichtquelle kann beispielsweise zumindest eine der zuvor genannten Teillichtquellen, also beispielsweise zumindest eine LED, sein oder umfassen. Die hier beschriebene Anordnung der Lichtquelle und die entsprechende Geometrie der Lichteinstrahlung oder Lichteinkopplung kann als sidefire-Anordnung bezeichnet werden. Für diese Anordnung geeignete, heutzutage verfügbare LEDs können beispielsweise ein besonders vorteilhaftes Farbspektrum bieten. Ein weiterer Vorteil dieser Anordnung ist zudem, dass die Lichtquelle beziehungsweise der zumindest eine lichtausstrahlende, seitlich von dem Flächenlichtleiterelement angeordnete Teil der Lichtquelle, an einem Rand des Oberflächenelements angeordnet sein kann und somit eine Anordnung und Gestaltung des lichtdurchlässigen Bereiches des Oberflächenelements in besonders geringem Maße einschränkt, also eine entsprechend flexible Gestaltung und Anordnung des lichtdurchlässigen Bereiches des Oberflächenelements ermöglicht.

In vorteilhafter Ausgestaltung der vorliegenden Erfindung ist zumindest ein lichtausstrahlender Teil der Lichtquelle an einer der Haupterstreckungsflächen des Flächenlichtleiterelements angeordnet und ausgerichtet zum Einkoppeln des von ihm ausgestrahlten Lichts in das Flächenlichtleiterelement zumindest im Wesentlichen in Richtung der gegenüberliegenden jeweils anderen Haupterstreckungsfläche des Flächenlichtleiterelements. Dabei ist gegenüber von der Lichtquelle an der jeweils anderen Haupterstreckungsfläche des Flächenlichtleiterelements ein Spiegelelement, insbesondere eine Spiegelfolie, angeordnet zum Reflektieren des von der Lichtquelle ausgestrahlten Lichts, welches das Flächenlichtleiterelement durchlaufen hat, zurück in das Flächenlichtleiterelement. Die Haupterstreckungsflächen des Flächenlichtleiterelements sind die bereits genannte Oberseite und Unterseite des Flächenlichtleiterelements, die sich zumindest im Wesentlichen parallel zu dem Oberflächenelement beziehungsweise zu der Unterseite des Oberflächenelements erstrecken.

Auch hier kann der zumindest eine lichtausstrahlende Teil der Lichtquelle beispielsweise zumindest eine der genannten Einzel- oder Teillichtquellen der Lichtquelle, also beispielsweise zumindest eine LED, sein oder umfassen. Der hier genannte lichtausstrahlende Teil kann ein anderer Teil als der im Zusammenhang mit der sidefire-Anordnung genannte lichtausstrahlende Teil der Lichtquelle sein. Dementsprechend können diese beiden unterschiedlichen lichtausstrahlenden Teile der Lichtquelle als erster lichtausstrahlender Teil und als zweiter lichtausstrahlender Teil bezeichnet werden.

Je nach vorgesehener Anordnung der Lichtquelle kann das Licht also an einer anderen Seite des Flächenlichtleiterelements oder an mehreren Seiten des Flächenlichtleiterelements in dieses eingekoppelt werden. Die hier vorgesehene Anordnung des lichtausstrahlenden Teils der Lichtquelle zum Einkoppeln des Lichts durch eine oder an einer Haupterstreckungsfläche des Flächenlichtleiterelements kann als topfire-Anordnung bezeichnet werden. Wie bei der sidefire-Anordnung kann die Lichtquelle auch bei der topfire-Anordnung ein Strahlenbündel oder einen Strahlenkegel ausstrahlen. Dadurch dass bei der topfire-Anordnung ein größerer Anteil des ausgestrahlten Lichtes in Richtung des Oberflächenelements oder in eine entgegengesetzte Richtung, also in einem zumindest im Durchschnitt steileren Winkel zu der Unterseite des Oberflächenelements ausgestrahlt wird, kann von außen betrachtet mit einer bestimmten Lichtleistung eine größere Helligkeit des lichtdurchlässigen Bereiches des Oberflächenelements erreicht werden als mit der sidefire-Anordnung. Dies kann beispielsweise der Fall sein, da typischerweise ein größerer Anteil des ausgekoppelten Lichtes in einem steileren Winkel, also näher an einer senkrecht auf dem Oberflächenelement stehenden Richtung durch den lichtdurchlässigen Teil des Oberflächenelements und damit in Richtung eines Betrachters oder Benutzers austritt.

In jedem Fall, insbesondere jedoch bei Verwendung der topfire-Anordnung, kann eine dem Flächenlichtleiterelement und dem Oberflächenelement zugewandte Oberseite des unteren Trägerelements bedruckt oder beschichtet sein. Dabei kann insbesondere ein Muster auf die Oberfläche des unteren Trägerelements gedruckt oder beschichtet sein, mittels welchem Inhomogenitäten in dem Flächenlichtleiterelement und/oder Inhomogenitäten in einer Lichtverteilung, also der Flächenhelligkeit ausgeglichen werden können. Dazu können verschiedene Teile oder Bereiche des Musters, also der Oberseite des unteren Trägerelements, verschiedene Reflexionsgrade oder Reflexionskoeffizienten oder Richtungscharakteristiken für eine Reflexion auftreffenden Lichtes aufweisen.

In vorteilhafter Weiterbildung der vorliegenden Erfindung ist es vorgesehen, dass je nachdem, ob das Spiegelelement oder der lichtausstrahlende Teil der Lichtquelle an der der Unterseite des Oberflächenelements zugewandten Haupterstreckungsfläche des Flächenlichtleiterelements angeordnet ist, das dort angeordnete Spiegelelement beziehungsweise der dort angeordnete Teil der Lichtquelle eine geringere Flächenausdehnung, also Größe, aufweist als das Oberflächenelement und im Bereich des lichtundurchlässigen Bereiches des Oberflächenelements angeordnet ist. Ist also der lichtausstrahlende Teil der Lichtquelle auf oder an der dem Oberflächenelement gegenüberliegenden Unterseite des Flächenlichtleiterelements angeordnet, so ist diesem Teil der Lichtquelle gegenüberliegend das Spiegelelement an der dem Oberflächenelement zugewandten Oberseite des Flächenlichtleiterelements angeordnet.

Dabei ist die Größe des Spiegelelements insbesondere abhängig von einer Größe oder einem Öffnungswinkel des von der Lichtquelle ausgestrahlten Strahlenbündels oder Strahlen- oder Lichtkegels, sodass dieses beziehungsweise dieser vollständig auf das Spiegelelement auftrifft. Je nach Auslegung der Lichtquelle und Anordnung beziehungsweise Gestaltung des lichtdurchlässigen Bereiches des Oberflächenelements kann also die Größe des Spiegelelements so ausgewählt oder festgelegt werden, dass durch das Spiegelelement kein Teil des lichtdurchlässigen Bereiches des Oberflächenelements verdeckt oder überdeckt wird.

Die Lichtquelle und/oder das Spiegelelement können bezogen auf die Fläche oder Ausdehnung des Oberflächenelements und/oder des Flächenlichtleiterelements mittig oder zentral angeordnet sein, um eine möglichst gleichmäßige Helligkeit beziehungsweise Leuchtdichte in dem gesamten lichtdurchlässigen Bereich des Oberflächenelements, also beispielsweise auf allen Seiten der Lichtquelle beziehungsweise des Spiegelelements, zu erreichen. Um zu erreichen, dass kein Teil des lichtdurchlässigen Bereiches durch das Spiegelelement verdeckt wird, kann aber ebenso eine nicht-zentrale Anordnung vorgesehen sein.

Zusätzlich oder alternativ kann die Lichtquelle beispielsweise so angeordnet sein, dass ein Zentralstrahl des von ihr ausgesandten Strahlenbündels oder Strahlenkegels nicht senkrecht, also unter einem von 90° verschiedenen Winkel, zu einer der Haupterstreckungsfläche des Flächenlichtleiterelements beziehungsweise zu der Unterseite des Oberflächenelements verläuft. Zusätzlich oder alternativ kann das Spiegelelement beispielsweise in Bezug auf die jeweilige Haupterstreckungsfläche des Flächenlichtleiterelements, an der es angeordnet oder ausgebildet sein, gekippt oder schräg angeordnet sein, sodass das Spiegelelement beziehungsweise eine spiegelnde Fläche oder Seite des Spiegelelements sich nicht parallel, also in einem von 0° und 180° verschiedenen Winkel, zu der jeweiligen Haupterstreckungsfläche erstreckt. Durch eine derartige gekippte oder schräge Anordnung der Lichtquelle und/oder des Spiegelelements kann eine Lichtverteilung in dem Flächenlichtleiterelement vorgegeben oder eingestellt werden, sodass je nach Bedarf oder Einzelfall eine besonders gleichmäßige Helligkeit oder Leuchtdichte über den lichtdurchlässigen Bereiches des Oberflächenelements hinweg erreicht werden kann.

Die Anordnung der Lichtquelle in der topfire-Anordnung auf oder an der von dem Oberflächenelement abgewandten Unterseite des Flächenlichtleiterelements, also an oder auf der dem Flächenlichtleiterelement zugewandten Oberseite des unteren Trägerelements ermöglicht vorteilhaft eine besonders einfache elektrische Kontaktierung der Lichtquelle. Insbesondere dann, wenn die umgekehrte Anordnung vorgesehen ist, wenn also die Lichtquelle an der Oberseite des Flächenlichtleiterelements angeordnet ist und das Licht in Richtung von dem Oberflächenelement weg, also in Richtung des unteren Trägerelements, abstrahlt, kann sich das Spiegelelement vorteilhaft über eine gesamte Größe oder Flächenerstreckung des Flächenlichtleiterelements, zumindest des lichtdurchlässigen Bereiches des Oberflächenelements, erstrecken. Hierdurch wird vorteilhaft eine mehrfache und ortsunabhängige, besonders effiziente Reflexion von auf das Spiegelelement auftreffendem Licht in Richtung des Oberflächenelements beziehungsweise des lichtdurchlässigen Bereiches und somit eine besonders effiziente Ausnutzung des Lichtes beziehungsweise der Lichtleistung der Lichtquelle ermöglicht. Bei dieser Anordnung kann das Spiegelelement beispielweise als Spiegelfolie oder reflektierende Beschichtung an der Unterseite des Flächenlichtleiterelements oder auf der Oberseite des unteren Trägerelements ausgebildet sein. Zudem kann so eine besonders flexible Anordnung und Gestaltung des lichtdurchlässigen Bereiches des Oberflächenelements auch in der topfire-Anordnung erreicht werden, da der lichtausstrahlende Teil der Lichtquelle eine geringere Größe aufweisen kann als eine von dieser bestrahlte Fläche, also als eine Größe oder Fläche des ausgestrahlten Lichtbündels oder Strahlen- beziehungsweise Lichtkegels.

In vorteilhafter Ausgestaltung der vorliegenden Erfindung ist an wenigstens einer Seitenfläche des Flächenlichtleiterelements, die sich zumindest im Wesentlichen senkrecht zu einer Haupterstreckungsfläche des Flächenlichtleiterelements erstreckt, ein Spiegelelement, insbesondere eine Spiegelfolie, angeordnet, um Licht, welches das Flächenlichtleiterelement durchlaufen und dieses nicht im Bereich des lichtdurchlässigen Bereiches des Oberflächenelements verlassen hat, zurück in das Flächenlichtleiterelement zu reflektieren. Auch hier kann das Spiegelelement beispielsweise als reflektierende Beschichtung des Flächenlichtleiterelements oder als separates Element oder Bauteil ausgebildet oder ausgeführt sein. Durch die Anordnung dieses Spiegelelements an einer oder mehreren der Seitenflächen des Flächenlichtleiterelements - daher auch bezeichnet als Seitenspiegelelement - kann vorteilhaft eine Ausnutzung des in das Flächenlichtleiterelement eingekoppelten Lichtes zum Hinterleuchten des Oberflächenelements, also eine entsprechende Effizienz der Be- oder Hinterleuchtung, weiter verbessert werden. Besonders vorteilhaft kann das seitliche Spiegelelement insbesondere zumindest an derjenigen Seitenfläche oder an denjenigen Seitenflächen angeordnet sein, die bei einer sidefire-Anordnung der Lichtquelle dieser gegenüber liegt beziehungsweise gegenüber liegen. Ebenso kann beispielsweise die Lichtquelle selbst von dem Spiegelelement umgeben sein.

In vorteilhafter Ausgestaltung der vorliegenden Erfindung ist an der Unterseite des Flächenlichtleiterelements, welche von dem Oberflächenelement abgewandt ist, eine Spiegelfolie angeordnet zum Reflektieren von Licht durch das Flächenlichtleiterelement in Richtung des Oberflächenelements. Die Spiegelfolie kann dabei zwischen dem Flächenlichtleiterelement und dem unteren Trägerelement angeordnet sein. Ebenso kann die Spiegelfolie die dem Flächenlichtleiterelement zugewandte Oberfläche des unteren Trägerelements bilden. Durch die Spiegelfolie kann mehr des Lichtes in Richtung des lichtdurchlässigen Bereiches des Oberflächenelements gelenkt beziehungsweise reflektiert werden. Dadurch ergibt sich eine erhöhte Helligkeit oder Leuchtdichte dieses Bereiches, also insgesamt eine verbesserte Effizienz.

In vorteilhafter Ausgestaltung der vorliegenden Erfindung ist zwischen der dem Oberflächenelement zugewandten Oberseite des Flächenlichtleiterelements und dem Oberflächenelement eine semitransparente, insbesondere mikrostrukturierte, Folie angeordnet zum Unterstützen einer Verteilung des von der Lichtquelle in das Flächenlichtleiterelement eingekoppelten Lichtes und/oder zum Unterstützen des Auskoppelns des Lichtes aus dem Flächenlichtleiterelement im Bereich des lichtdurchlässigen Bereiches des Oberflächenelements. Die Verteilung des Lichtes kann durch die semitransparente, insbesondere mikrostrukturierte, Folie insbesondere in einer Haupterstreckungsrichtung oder Haupterstreckungsebene des Flächenlichtleiterelements unterstützt werden. Dazu kann durch eine entsprechende Gestaltung und/oder Materialwahl der Folie in Abhängigkeit von einem für das Flächenlichtleiterelement verwendeten Material ein Verhalten des Lichtes an der entsprechenden Grenzfläche zwischen der Folie und dem Flächenlichtleiterelement beeinflusst oder eingestellt werden, insbesondere hinsichtlich eines Reflexionsgrades und/oder einer Reflexionsrichtung. Dazu können beispielsweise die Brechungsindizes der Folie und des Flächenlichtleiterelements aufeinander abgestimmt, oder in Abhängigkeit voneinander eingestellt oder vorgegeben werden. Ebenso kann durch die Semitransparenz der Folie eine besonders gleichmäßige Flächenhelligkeit oder Leuchtdichte über den lichtdurchlässigen Bereiches des Oberflächenelements hinweg erreicht werden.

Ebenso wie die semitransparente Folie kann auch die bereits genannte Spiegelfolie mikrostrukturiert sein, um ein verbessertes Reflexionsverhalten zu erreichen. Die semitransparente Folie und/oder die Spiegelfolie können sich jeweils über die gesamte Größe oder Fläche des Flächenlichtleiterelements erstrecken. Dabei wird durch die Klebeeigenschaften des Materials des Flächenlichtleiterelements vorteilhaft verhindert, dass sich die Folien relativ zu dem Flächenlichtleiterelement bewegen oder verschieben.

Besonders bevorzugt kann ein jeweiliger Teilbereich des Flächenlichtleiterelements von der semitransparenten Folie und/oder von der Spiegelfolie unbedeckt bleiben. Auf diese Weise kann vorteilhaft trotz der Anordnung der semitransparente Folie und/oder der Spiegelfolie ein direkter Kontakt zwischen dem unteren Trägerelement und dem Flächenlichtleiterelement einerseits und/oder zwischen dem Oberflächenelement und dem Flächenlichtleiterelement andererseits erreicht oder sichergestellt werden. Das Oberflächenelement und/oder das untere Trägerelement können also auch bei Verwendung der jeweiligen Folie in dem unbedeckten Bereich des Flächenlichtleiterelements unmittelbar an diesem anliegen und somit durch dessen Klebeeigenschaft an diesem gehalten oder befestigt sein. Dadurch kann also die gesamte Schichtanordnung des Bedien- und/oder Anzeigeelements durch die Klebeeigenschaft des Flächenlichtleiterelements zusammengehalten werden. Besonders bevorzugt kann der jeweilige von der jeweiligen Folie unbedeckte Bereich der jeweiligen Haupterstreckungsfläche des Flächenlichtleiterelements sich an einem Rand oder entlang des Randes des Flächenlichtleiterelements erstrecken. Hierdurch wird vorteilhaft das Hinterleuchten des Oberflächenelements in besonders geringem Ausmaß beeinflusst.

In vorteilhafter Ausgestaltung der vorliegenden Erfindung weist das Bedien- und/oder Anzeigeelement wenigstens ein berührungs- und/oder drucksensitives Element und/oder wenigstens einen Aktuator zum Erzeugen einer Vibration, also einer haptischen Rückmeldung oder eines haptischen Signals, an dem Oberflächenelement auf. Das berührungs- und/oder drucksensitive Element ist also eingerichtet zum Detektieren einer Berührung des Oberflächenelements durch einen Benutzer. Das Oberflächenelement, das Flächenlichtleiterelement, das untere Trägerelement und das wenigstens eine berührungs- und/oder drucksensitive Element sind dabei luftspaltfrei miteinander verbunden. Dies kann bedeuten, dass die oder jeweils zwei der genannten Elemente beziehungsweise Bauteile in direktem, also unmittelbaren Kontakt zueinander stehen oder angeordnet sind.

Ebenso können zwischen einigen oder allen dieser Elemente oder Bauteile aber weitere Elemente oder Bauteile angeordnet sein, welche dann jeweils beidseitig ebenfalls luftspaltfrei mit den genannten Elementen oder Bauteilen verbunden, also in direktem mechanischem Kontakt mit diesen angeordnet sind. Durch diese luftspaltfreie Anordnung kann zum einen die Berührung des Oberflächenelements besonders zuverlässig detektiert werden und zum anderen kann vorteilhaft eine Anzahl von Grenzschichten, die das Licht von der Lichtquelle bis zum Durchtreten des lichtdurchlässigen Bereiches durchlaufen oder überwinden muss, minimiert werden, wodurch Streuverluste und unerwünschte Reflexionen vermieden werden können.

Bei der hier vorgesehenen Anordnung sind die genannten Elemente oder Bauteile also in einer Stapelrichtung, das heißt senkrecht zu den Haupterstreckungsflächen des Flächenlichtleiterelements und des Oberflächenelements ohne Luftspalt mittelbar oder unmittelbar aneinander angeordnet, also mechanisch gekoppelt. Somit kann ein durch die Berührung auf das Oberflächenelement ausgeübter Druck besonders effizient bis zu dem wenigstens einen berührungs- und/oder drucksensitiven Element geleitet werden. Das wenigstens eine berührungs- und/oder drucksensitive Element kann beispielsweise auf dem unteren Trägerelement angeordnet sein. Dies ermöglicht vorteilhaft eine besonders einfache elektrische Kontaktierung zu Energieversorgung, insbesondere falls das untere Trägerelement als Leiterplatte ausgebildet ist.

Ein weiterer Aspekt der vorliegenden Erfindung ist ein Kraftfahrzeug mit wenigstens einem erfindungsgemäßen Bedien- und/oder Anzeigeelements. Das erfindungsgemäße Kraftfahrzeug kann also insbesondere das im Zusammenhang mit dem erfindungsgemäßen Bedien- und/oder Anzeigeelement genannte Kraftfahrzeug sein.

Im Folgenden sind Ausführungsbeispiele der Erfindung beschrieben. Hierzu zeigt:
- Fig. 1: eine schematische seitliche Schnittansicht eines Bedien- und/oder Anzeigeelements mit einer Lichtquelle in sidefire-Anordnung;
- Fig. 2: eine schematische seitliche Schnittansicht eines Bedien- und/oder Anzeigeelements mit einer Lichtquelle in topfire-Anordnung;
- Fig. 3: eine schematische Schnittansicht eines Bedien- und/oder Anzeigeelements in topfire-Anordnung von unten; und
- Fig. 4: eine schematische Perspektivansicht eines Bedien- und/oder Anzeigeelements

In den Figuren sind funktionsgleiche Elemente jeweils mit denselben Bezugszeichen versehen.

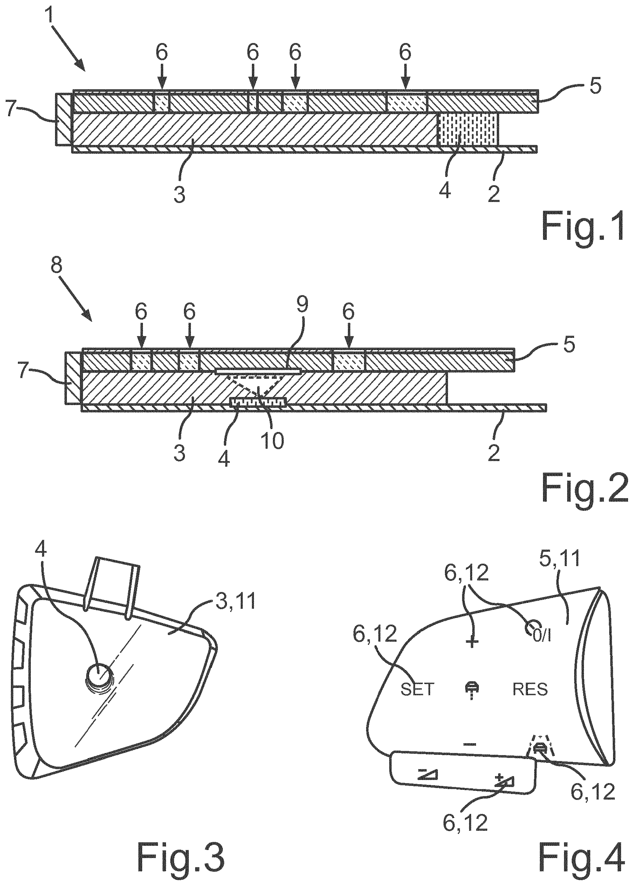

Fig. 1 zeigt eine schematische geschnittene Seitenansicht eines ersten Bedien- und/oder Anzeigeelements 1. Dieses umfasst als unterste Lage oder Schicht eine Leiterplatte 2. Auf der Leiterplatte 2 sind ein Flächenlichtleiterelement 3 aus einem optisch klaren Kleber und eine neben diesem angeordnete Lichtquelle, vorliegend ausgeführt als LED 4, angeordnet. Darüber ist als oberste Schicht ein Oberflächenelement 5 angeordnet. Bei dem Oberflächenelement 5 handelt es sich vorliegend um eine Kappe oder Blende, welche eine einem jeweiligen Benutzer des ersten Bedien- und/oder Anzeigeelements 1 zugewandte Oberfläche bildet. Das Oberflächenelement 5 ist bereichsweise lichtundurchlässig ausgebildet und weist mehrere lichtdurchlässige Bereiche 6 auf. An einer der LED 4 gegenüberliegenden Seitenfläche des Flächenlichtleiterelements 3 ist vorliegend ein, beispielsweise als Spiegelfolie ausgeführtes, seitliches Spiegelelement 7 angeordnet.

Bei der in Fig. 1 dargestellten Anordnung handelt es sich um eine sidefire-Anordnung. In dieser Anordnung strahlt die LED 4 Licht in Richtung des gegenüberliegenden seitlichen Spiegelelements 7 aus. Dieses von der LED 4 ausgestrahlte und in das Flächenlichtleiterelement 3 eingekoppelte Licht breitet sich in dem Flächenlichtleiterelement 3 aus und tritt, gegebenenfalls nach einer oder mehreren Reflexionen, durch einen der lichtdurchlässigen Bereiche 6 durch das Oberflächenelement 5 aus. Dadurch erscheinen die lichtdurchlässigen Bereiche 6 hell oder erleuchtet.

Fig. 2 zeigt eine schematische geschnittene Seitenansicht eines zweiten Bedien- und/oder Anzeigeelements 8, welches im Wesentlichen die gleichen Komponenten wie das erste Bedien- und/oder Anzeigeelement 7 aufweist. In Fig. 2 ist jedoch die LED 4 in einer topfire-Anordnung dargestellt. Dazu ist die LED 4 nicht an einer Seitenfläche, sondern an einer Unterseite des Flächenlichtleiterelements 3 angeordnet. Der LED 4 gegenüberliegend ist an der Oberseite des Flächenlichtleiterelements 3 ein zentrales Spiegelelement 9 angeordnet. Das zentrale Spiegelelement 9 ist dabei zwischen zweien der lichtdurchlässigen Bereiche 6, also an einem lichtundurchlässigen Bereich des Oberflächenelements 5 angeordnet. Zur Veranschaulichung ist vorliegend zudem ein von der LED 4 ausgestrahlter Lichtkegel 10 dargestellt. Eine Größe des zentralen Spiegelelements 9 ist dabei so ausgelegt, dass der Lichtkegel 10 vollständig auf das zentrale Spiegelelement 9 auftrifft. Von dem zentralen Spiegelelement 9 wird das von der LED 4 ausgestrahlte Licht zurück in das Flächenlichtleiterelement 3 reflektiert. Hier nicht erkennbar ist eine Grenzschicht zwischen dem Flächenlichtleiterelement und der Leiterplatte 2 ebenfalls lichtreflektierend, beispielsweise als Spiegelfolie oder spiegelnde Beschichtung, ausgebildet. Somit gelangt auch hier das von der LED 4 ausgestrahlte Licht letztendlich durch die lichtdurchlässigen Bereiche 6 nach außen.

Aufgrund der schematischen Darstellungen des ersten und zweiten Bedien- und/oder Anzeigeelements 1, 8 sind weitere Komponenten, die vorgesehen sein können, hier nicht im Einzelnen erkennbar. Zumindest bereichsweise ist etwa eine Grenzschicht zwischen dem Flächenlichtleiterelement 3 und dem Oberflächenelement 5 als semitransparente mikrostrukturierte Folie oder Beschichtung ausgebildet. Zudem umfasst die Leiterplatte 2 wenigstens ein drucksensitives Element, mittels welchem eine Berührung des Oberflächenelements 5 detektierbar ist. Auch können die jeweiligen LEDs 4 mehrere Einzel- oder Punktlichtquellen umfassen. Ebenso können weitere LEDs 4 in sidefire- und/oder topfire-Anordnung sowohl als Teil des ersten Bedien- und/oder Anzeigeelements 1 als auch als Teil des zweiten Bedien- und/oder Anzeigeelements 8 vorgesehen sein.

Das Flächenlichtleiterelement 3 kann beispielsweise aus einem Polymer oder Polymermaterial oder beispielsweise aus einem silikonbasierten optisch klaren Kleber bestehen. Grundsätzlich sind hier mehrere geeignete Materialien bekannt und verwendbar, die sowohl optisch klar, also transparent oder durchlässig für das von der LED 4 ausgestrahlte Licht als auch klebend, also adhäsiv, sind.

Fig. 3 zeigt eine schematische Schnittansicht eines dritten Bedien- und/oder Anzeigeelements 11 von unten. Nicht dargestellt ist hier die entsprechende Leiterplatte 2. Dadurch ist der Blick freigegeben auf die Unterseite, also eine Haupterstreckungsfläche des Flächenlichtleiterelements 3 und die in topfire-Anordnung an diesem angeordnete LED 4.

Fig. 4 zeigt eine schematische Perspektivansicht des dritten Bedien- und/oder Anzeigeelements 11 von außen. Hier ist erkennbar, dass die lichtdurchlässigen Bereiche 6 in dem Oberflächenelement 5 als Symbole 12 ausgebildet sind, welche entsprechende Funktionen oder Schaltzustände repräsentieren oder anzeigen. Bei aktivierter LED 4 erscheinen die Symbole 12 dann hinterleuchtet, also hell gegenüber den übrigen, lichtundurchlässigen Bereichen des Oberflächenelements 5.

Mit dem jeweiligen hier dargestellten Aufbau der Bedien- und/oder Anzeigeelemente 1, 8, 11 lassen sich auf besonders einfache und kostengünstige Art und Weise Hinterleuchtungen realisieren, die für unterschiedlichste Anwendungen in einem Kraftfahrzeug geeignet sind. Je nach Anzahl und Auslegung der LEDs 4 lassen sich beispielsweise Leuchtdichten von mehreren 1000 cd/m² in den lichtdurchlässigen Bereichen 6 realisieren. Dabei können gegenüber herkömmlichen Bauweisen, in denen statt des optisch klaren Klebers für das Flächenlichtleiterelement 3 eine Kunststofffolie verwendet wird, Werkzeug- und Zusammenbaukosten von beispielsweise bis zu 80 % eingespart werden.

### Bezugszeichenliste

- 1: erstes Bedien- und/oder Anzeigeelement
- 2: Leiterplatte
- 3: Flächenlichtleiterelement
- 4: LED
- 5: Oberflächenelement
- 6: lichtdurchlässige Bereiche
- 7: seitliches Spiegelelement
- 8: zweites Bedien- und/oder Anzeigeelement
- 9: zentrales Spiegelelement
- 10: Lichtkegel
- 11: drittes Bedien- und/oder Anzeigeelement
- 12: Symbole

## Patentansprüche

1. Bedien- und/oder Anzeigeelement (1, 8, 11) für ein Kraftfahrzeug mit einem außenseitigen Oberflächenelement (5), mit einem aus einem optisch klaren Kleber bestehenden Flächenlichtleiterelement (3), welches auf einer Unterseite des Oberflächenelements (5) mit diesem verbunden ist, und mit einer Lichtquelle (4), die angeordnet ist zum Einkoppeln von von ihr ausgestrahltem Licht in das Flächenlichtleiterelement (3),
wobei das Oberflächenelement (5) bereichsweise (6, 12) lichtdurchlässig für das von der Lichtquelle (4) ausgestrahlte Licht (10) und bereichsweise hierfür undurchlässig ausgebildet ist, und
das Flächenlichtleiterelement (3) zwischen der Unterseite des Oberflächenelements (5) und einem unteren Trägerelement (2) angeordnet ist und sich zumindest über die lichtdurchlässigen Bereiche (6, 12) des Oberflächenelements (5) erstreckt zum flächigen Hinterleuchten des Oberflächenelements (5) durch Auskoppeln des eingekoppelten Lichts (10) durch eine der Unterseite des Oberflächenelements (5) zugewandte Oberseite des Flächenlichtleiterelements (3),
wobei das untere Trägerelement (2) als Leiterplatte (2) ausgebildet und zum Versorgen der Lichtquelle (4) mit elektrischer Energie mit der Lichtquelle (4) elektrisch verbunden ist, wobei das Oberflächenelement (5) zumindest bereichsweise durch das Flächenlichtleiterelement (3) mit dem unteren Trägerelement (2) verklebt ist,
**dadurch gekennzeichnet, dass**
das Flächenlichtleiterelement (3) eine flächig erstreckte oder ausgedehnte Schicht aus dem optisch klaren Kleber ist, wobei eine Größe oder Fläche des Flächenlichtleiterelements (3) in dessen Haupterstreckungsebene, Haupterstreckungsfläche oder Haupterstreckungsrichtung signifikant größer als eine senkrecht dazu gemessene Dicke des Flächenlichtleiterelements (3) ist, wobei sich die Haupterstreckungsflächen oder Haupterstreckungsebenen des Flächenlichtleiterelements (3), des Oberflächenelements (5) und des unteren Trägerelements (2) parallel zueinander erstrecken, so dass das Oberflächenelement (5), das Flächenlichtleiterelement (3) und das untere Trägerelement eine Schicht- oder Sandwichstruktur bilden.

2. Bedien- und/oder Anzeigeelement (1, 8, 11) nach Anspruch 1,
**dadurch gekennzeichnet, dass**
zumindest ein lichtausstrahlender Teil der Lichtquelle (4) seitlich von dem Flächenlichtleiterelement (3) ebenfalls zwischen dem Oberflächenelement (5) und dem unteren Trägerelement (2) angeordnet ist und ausgerichtet zum Einkoppeln des von ihm ausgestrahlten Lichts (10) in das Flächenlichtleiterelement (3) zumindest im Wesentlichen parallel zu einer Haupterstreckungsfläche des Flächenlichtleiterelements (3) und des Oberflächenelements (5).

3. Bedien- und/oder Anzeigeelement (1, 8, 11) nach einem der vorhergehenden Ansprüche,
**dadurch gekennzeichnet, dass**
zumindest ein lichtausstrahlender Teil der Lichtquelle (4) an einer Haupterstreckungsfläche des Flächenlichtleiterelements (3) angeordnet ist und ausgerichtet ist zum Einkoppeln des von ihm ausgestrahlten Lichts (10) in das Flächenlichtleiterelement (3) zumindest im Wesentlichen in Richtung der gegenüberliegenden jeweils anderen Haupterstreckungsfläche des Flächenlichtleiterelements (3), wobei gegenüber von der Lichtquelle (4) an der jeweils anderen Haupterstreckungsfläche des Flächenlichtleiterelements (3) ein Spiegelelement (9), insbesondere eine Spiegelfolie, angeordnet ist, zum Reflektieren des von der Lichtquelle (4) ausgestrahlten Lichtes, welches das Flächenlichtleiterelement (3) durchlaufen hat, zurück in das Flächenlichtleiterelement (3).

4. Bedien- und/oder Anzeigeelement (1, 8, 11) nach Anspruch 3,
**dadurch gekennzeichnet, dass**
je nachdem, ob das Spiegelelement (9) oder der Teil der Lichtquelle (4) an der der Unterseite des Oberflächenelements (5) zugewandten Haupterstreckungsfläche des Flächenlichtleiterelements (3) angeordnet ist, das dort angeordnete Spiegelelement (9) beziehungsweise der dort angeordnete Teil der Lichtquelle (4) eine geringere Flächenausdehnung aufweist als das Oberflächenelement (5) und im Bereich eines lichtundurchlässigen Bereiches des Oberflächenelements (5) angeordnet ist.

5. Bedien- und/oder Anzeigeelement (1, 8, 11) nach einem der vorhergehenden Ansprüche,
**dadurch gekennzeichnet, dass**
an wenigstens einer Seitenfläche des Flächenlichtleiterelements (3), die sich zumindest im Wesentlichen senkrecht zu einer Haupterstreckungsfläche des Flächenlichtleiterelements (3) erstreckt, ein Spiegelelement (7), insbesondere eine Spiegelfolie, angeordnet ist, um Licht, welches das Flächenlichtleiterelement (3) durchlaufen und dieses nicht im Bereich des lichtdurchlässigen Bereiches (6, 12) des Oberflächenelements (5) verlassen hat, zurück in das Flächenlichtleiterelement (3) zu reflektieren.

6. Bedien- und/oder Anzeigeelement (1, 8, 11) nach einem der vorhergehenden Ansprüche,
**dadurch gekennzeichnet, dass**
an einer Unterseite des Flächenlichtleiterelements (3), welche von dem Oberflächenelement (5) abgewandt ist, eine Spiegelfolie angeordnet ist zum Reflektieren von Licht durch das Flächenlichtleiterelement (3) in Richtung des Oberflächenelements (5).

7. Bedien- und/oder Anzeigeelement (1, 8, 11) nach einem der vorhergehenden Ansprüche,
**dadurch gekennzeichnet, dass**
zwischen einer dem Oberflächenelement (5) zugewandten Oberseite des Flächenlichtleiterelements (3) und dem Oberflächenelement (5) eine semitransparente, insbesondere mikrostrukturierte, Folie angeordnet ist zum Unterstützen einer Verteilung des von der Lichtquelle (4) in das Flächenlichtleiterelement (3) eingekoppelten Lichtes (10) und/oder zum Unterstützen des Auskoppelns des Lichtes (10) aus dem Flächenlichtleiterelement (3) im Bereich des lichtdurchlässigen Bereiches (6, 12) des Oberflächenelements (5).

8. Bedien- und/oder Anzeigeelement (1, 8, 11) nach einem der vorhergehenden Ansprüche,
**dadurch gekennzeichnet, dass**
das Bedien- und/oder Anzeigeelement (1, 8, 11) wenigstens ein berührungs- und/oder drucksensitives Element aufweist zum Detektieren einer Berührung des Oberflächenelements (5) durch einen Benutzer, wobei das Oberflächenelement (5), das Flächenlichtleiterelement (3), das untere Trägerelement (2) und das wenigstens eine berührungs- und/oder drucksensitive Element luftspaltfrei miteinander verbunden sind.

## Claims

1. Operating and/or display element (1, 8, 11) for a motor vehicle, having a surface element (5) on the outer side, having a surface light-guide element (3), which consists of an optically clear adhesive and is connected to the surface element (5) on an underside thereof, and having a light source (4), which is arranged for coupling light emitted by it into the surface light-guide element (3),
wherein the surface element (5) is embodied to be light-transmissive in certain regions (6, 12) for the light (10) emitted by the light source (4) and to be opaque to the light in certain regions, and
the surface light-guide element (3) is arranged between the underside of the surface element (5) and a lower carrier element (2) and extends at least over the light-transmissive regions (6, 12) of the surface element (5) for two-dimensionally backlighting the surface element (5) by outcoupling the incoupled light (10) through a top side of the surface light-guide element (3) facing the underside of the surface element (5),
wherein the lower carrier element (2) is embodied in the form of a circuit board (2) and is electrically connected to the light source (4) to supply the light source (4) with electrical energy, wherein the surface element (5) is adhesively bonded to the lower carrier element (2) by way of the surface light-guide element (3) at least in certain regions,
**characterized in that**
the surface light-guide element (3) is a two-dimensional or extended layer made of the optically clear adhesive, wherein the size or area of the surface light-guide element (3) in its main plane of extension, main surface of extension or main direction of extension is significantly larger than a thickness of the surface light-guide element (3) measured perpendicular thereto, wherein the main surfaces of extent or main planes of extent of the surface light-guide element (3), of the surface element (5) and of the lower carrier element (2) extend parallel to one another in a manner such that the surface element (5), the surface light-guide element (3) and the lower carrier element form a layer structure or sandwich structure.

2. Operating and/or display element (1, 8, 11) according to Claim 1,
**characterized in that**
at least one light-emitting part of the light source (4) is arranged between the surface element (5) and the lower carrier element (2), laterally of the surface light-guide element (3), and is oriented for coupling the light (10) it emits into the surface light-guide element (3) at least substantially parallel to a main surface of extent of the surface light-guide element (3) and of the surface element (5).

3. Operating and/or display element (1, 8, 11) according to either of the preceding claims,
**characterized in that**
at least one light-emitting part of the light source (4) is arranged on a main surface of extent of the surface light-guide element (3) and is oriented for coupling the light (10) it emits into the surface light-guide element (3) at least substantially in the direction of the opposite, respectively other main surface of extent of the surface light-guide element (3), wherein a mirror element (9), in particular a mirror foil, is arranged opposite the light source (4) and the respectively other main surface of extent of the surface light-guide element (3), for reflecting the light emitted by the light source (4) that has passed through the surface light-guide element (3) back into the surface light-guide element (3) .

4. Operating and/or display element (1, 8, 11) according to Claim 3,
**characterized in that**,
depending on whether the mirror element (9) or the part of the light source (4) is arranged on the main surface of extent of the surface light-guide element (3) facing the underside of the surface element (5), the mirror element (9) arranged there or the part of the light source (4) arranged there has a smaller surface extent than the surface element (5) and is arranged in the region of an opaque region of the surface element (5).

5. Operating and/or display element (1, 8, 11) according to any of the preceding claims,
**characterized in that**
a mirror element (7), in particular a mirror foil, is arranged on at least one side face of the surface light-guide element (3) extending at least substantially perpendicularly to a main surface of extent of the surface light-guide element (3), in order to reflect light that has passed through the surface light-guide element (3) and has not emerged therefrom in the region of the light-transmissive region (6, 12) of the surface element (5) back into the surface light-guide element (3) .

6. Operating and/or display element (1, 8, 11) according to any of the preceding claims,
**characterized in that**
a mirror foil is arranged on an underside of the surface light-guide element (3) facing away from the surface element (5) to reflect light through the surface light-guide element (3) in the direction of the surface element (5) .

7. Operating and/or display element (1, 8, 11) according to any of the preceding claims,
**characterized in that**
a semi-transparent, in particular microstructured, film is arranged between a top side of the surface light-guide element (3) facing the surface element (5) and the surface element (5), to help distribute the light (10) coupled from the light source (4) into the surface light-guide element (3) and/or to help couple the light (10) out of the surface light-guide element (3) in the region of the light-transmissive region (6, 12) of the surface element (5).

8. Operating and/or display element (1, 8, 11) according to any of the preceding claims,
**characterized in that**
the operating and/or display element (1, 8, 11) has at least one touch-sensitive and/or pressure-sensitive element for detecting a touch by a user on the surface element (5), wherein the surface element (5), the surface light-guide element (3), the lower carrier element (2) and the at least one touch-sensitive and/or pressure-sensitive element are connected to one another without air gaps.

## Revendications

1. Élément de commande et/ou d'affichage (1, 8, 11), destiné à un véhicule automobile, qui comprend un élément de surface extérieure (5), un élément de surface photoconducteur (3) qui est pourvu d'un adhésif optiquement transparent et qui est relié à l'élément de surface (5) sur le côté inférieur de celui-ci, et une source de lumière (4) qui est disposée de manière à injecter par couplage la lumière, émise par celle-ci, dans l'élément de surface photoconducteur (3),
l'élément de surface (5) étant conçu pour être par endroits (6, 12) transparent pour la lumière (10) émise par la source de lumière (4) et par endroits opaque à ladite lumière, et
l'élément de surface photoconducteur (3) étant disposé entre le côté inférieur de l'élément de surface (5) et un élément de support inférieur (2) et s'étendant au moins sur les zones transparentes (6, 12) de l'élément de surface (5) afin d'effectuer un rétro-éclairage surfacique de l'élément de surface (5) en ce que la lumière (10) injectée par couplage sort par couplage à travers un côté supérieur de l'élément de surface photoconducteur (3) qui est dirigé vers le côté inférieur de l'élément de surface (5),
l'élément de support inférieur (2) étant conçu comme une carte de circuit imprimé (2) et étant relié électriquement à la source de lumière (4) pour alimenter la source de lumière (4) en énergie électrique, l'élément de surface (5) étant collé à l'élément de support inférieur (2) au moins par endroits par le biais de l'élément de surface photoconducteur (3),
**caractérisé en ce que**
l'élément de surface photoconducteur (3) est une couche d'adhésif optiquement transparent qui est étendue ou allongée de manière sensiblement bidimensionnelle, une dimension ou une surface de l'élément de surface photoconducteur (3) dans le plan d'extension principal, la surface d'extension principale ou la direction d'extension principale de celui-ci étant significativement plus grande qu'une épaisseur de l'élément de surface photoconducteur (3) mesurée perpendiculairement, les surfaces d'extension principales ou les plans d'extension principaux de l'élément de surface photoconducteur (3), de l'élément de surface (5) et de l'élément de support inférieur (2) s'étendant parallèlement entre elles/eux de sorte que l'élément de surface (5), l'élément de surface photoconducteur (3) et l'élément de support inférieur forment une structure en couches ou en sandwich.

2. Élément de commande et/ou d'affichage (1, 8, 11) selon la revendication 1,
**caractérisé en ce que**
au moins une partie photoémettrice de la source de lumière (4) est également disposée latéralement à l'élément de surface photoconducteur (3) entre l'élément de surface (5) et l'élément de support inférieur (2) et est orientée de manière à injecter par couplage la lumière (10), émise par ladite partie, dans l'élément de surface photoconducteur (3) de manière au moins sensiblement parallèle à une surface d'extension principale de l'élément de surface photoconducteur (3) et de l'élément de surface (5).

3. Élément de commande et/ou d'affichage (1, 8, 11) selon l'une des revendications précédentes,
**caractérisé en ce que**
au moins une partie photoémettrice de la source de lumière (4) est disposée sur une surface d'extension principale de l'élément de surface photoconducteur (3) et est orientée de manière à injecter par couplage la lumière (10), émise par ladite partie, dans l'élément de surface photoconducteur (3) au moins sensiblement dans la direction de l'autre surface d'extension principale opposée de l'élément de surface photoconducteur (3), un élément formant miroir (9), en particulier un film formant miroir, étant disposé en face de la source de lumière (4) sur l'autre surface d'extension principale respective de l'élément de surface photoconducteur (3) afin de réfléchir la lumière, émise par la source de lumière (4), qui passe à travers l'élément de surface photoconducteur (3), et la renvoyer dans l'élément de surface photoconducteur (3) .

4. Élément de commande et/ou d'affichage (1, 8, 11) selon la revendication 3,
**caractérisé en ce que**
selon lequel de l'élément formant miroir (9) et de la partie de la source de lumière (4) est disposé sur la surface d'extension principale de l'élément de surface photoconducteur (3) qui est dirigée vers le côté inférieur de l'élément de surface (5), l'élément formant miroir (9) qui est disposé à cet endroit ou la partie de la source de lumière (4) qui est disposée à cet endroit a une étendue de surface plus petite que l'élément de surface (5) et est disposé(e) au niveau d'une zone opaque de l'élément de surface (5).

5. Élément de commande et/ou d'affichage (1, 8, 11) selon l'une des revendications précédentes,
**caractérisé en ce que**
un élément formant miroir (7), en particulier un film formant miroir, est disposé sur au moins une surface latérale de l'élément de surface photoconducteur (3) qui s'étend au moins sensiblement perpendiculairement à une surface d'extension principale de l'élément de surface photoconducteur (3) afin de réfléchir la lumière, qui passe à travers l'élément de surface photoconducteur (3) et qui ne quitte pas celui-ci au niveau de la zone transparente (6, 12) de l'élément de surface (5), et la renvoyer dans l'élément de surface photoconducteur (3).

6. Élément de commande et/ou d'affichage (1, 8, 11) selon l'une des revendications précédentes,
**caractérisé en ce que**
un film formant miroir est disposé sur un côté inférieur de l'élément de surface photoconducteur (3), qui est dirigé à l'opposé de l'élément de surface (5), pour réfléchir la lumière à travers l'élément de surface photoconducteur (3) dans la direction de l'élément de surface (5).

7. Élément de commande et/ou d'affichage (1, 8, 11) selon l'une des revendications précédentes,
**caractérisé en ce que**
un film semi-transparent, en particulier micro-structuré, est disposé entre un côté supérieur de l'élément de surface photoconducteur (3) dirigé vers l'élément de surface (5) et l'élément de surface (5) afin de favoriser une répartition de la lumière (10) injectée par couplage par la source de lumière (4) dans l'élément de surface photoconducteur (3) et /ou favoriser la sortie par couplage de la lumière (10) de l'élément de surface photoconducteur (3) au niveau de la zone transparente (6, 12) de l'élément de surface (5) .

8. Élément de commande et/ou d'affichage (1, 8, 11) selon l'une des revendications précédentes,
**caractérisé en ce que**
l'élément de commande et/ou d'affichage (1, 8, 11) comporte au moins un élément tactile et/ou sensible à la pression destiné à détecter un contact de l'élément de surface (5) par un utilisateur, l'élément de surface (5), l'élément de surface photoconducteur (3), l'élément de support inférieur (2) et l'au moins un élément tactile et/ou sensible à la pression étant reliés entre eux sans jeu.
